# EUROPEAN PATENT APPLICATION

(11) **EP 3 306 101 A1**
(43) Date of publication of application: **11.04.2018**
(21) Application number: 17194720.3
(22) Date of filing: 04.10.2017
(51) Int. Cl.: F04D 19/00, F04D 29/32, F04D 29/38

(54) **HIGH EFFICIENCY FAN**

(30) Priority: 07.10.2016 US 201662405687 P
(71) Applicant: Wood, Anthony, Rhome, TX 76078 (US)
(72) Inventor: Wood, Anthony, Rhome, TX 76078 (US)
(74) Representative: Hanna Moore + Curley

(57) **Abstract**

A fan assembly (100) includes a hub (104) with fan blades (106) extending therefrom. Each fan blade couples to the hub and includes a proximal end (107), a distal end (105), a leading edge (109), and a trailing edge (111). Each fan blade is twisted and reverse-swept. The width at the proximal end is greater than the width of a fan blade at the distal end. The twist begins at the neck at the proximal end of the fan blade and continues along the length of the radius toward the distal end. The thickness of each fan blade along its chord width remains approximately the same. As a result, the fan provides axial airflow along the entire length of each fan blade, instead of just outer regions of the fan blades.

## Description

### CROSS REFERENCE TO RELATED APPLICATIONS

The present application claims priority to and the benefit of the U.S. Provisional Patent Application No. 62/405,687, filed October 7, 2016, which is hereby incorporated by reference in its entirety as if fully set forth below in its entirety and for all applicable purposes.

### TECHNICAL FIELD

The present disclosure is directed high efficiency fans. More specifically, the present disclosure is directed to embodiments using a non-airfoil, reverse-swept, twisted, and non-uniform blade design that provides airflow across the length of the blades from proximal to distal ends.

### BACKGROUND OF THE DISCLOSURE

Fans come in a variety of sizes, shapes, and configurations. Some fans may include reverse-swept blades, while others may have airfoil or non-airfoil blades, while yet others may have twisted blades with reference to the hub of the fan. Existing approaches to fan design, however, result in fans that are unable to grab air along the length of the fan blades. For example, some approaches only grab air along an outer region of each blade, such as the last several inches of a given fan blade of a fan. This results in reduced airflow approaching the center of the fan (such as no airflow at all through the fan near the center where the hub of the fan is located).

Further, existing fan designs still impose a non-negligible load on the driving source. For example, for fans installed on vehicle engines, e.g. to cool the engine, in operation the fan may draw multiple horsepower (e.g., 10 or more) from the engine, corresponding to a decrease in fuel efficiency of the vehicle. This is due at least in part to the noted inefficiencies of current fan designs that are limited in airflow to the outer regions of the fan's blades. Such inefficiencies in airflow, and further drain on horsepower and energy source efficiency, is undesirable.

The present disclosure is directed to fans that overcome one or more of the shortcomings of existing approaches such as to provide airflow along the entire length of the fan blade.

### BRIEF DESCRIPTION OF THE DRAWINGS

The present disclosure is best understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.
FIG. 1 is a plan view of a schematic of an exemplary fan assembly according to one or more aspects of the present disclosure.
FIG. 2 is a perspective view of a schematic of an exemplary fan assembly according to one or more aspects of the present disclosure.
FIG. 3A is a cross-section view of a schematic of an exemplary fan assembly according to one or more aspects of the present disclosure.
FIG. 3B is a schematic of an exemplary fan blade with a cross-section schematic according to one or more aspects of the present disclosure.
FIG. 3C is a schematic of an exemplary fan blade with cross-section schematics along multiple chords of the fan blade according to one or more aspects of the present disclosure.
FIG. 4 is a flow chart showing an exemplary process for manufacturing an exemplary fan assembly according to aspects of the present disclosure.

### DETAILED DESCRIPTION

It is to be understood that the following disclosure provides many different embodiments, or examples, for implementing different features of various embodiments. Specific examples of components and arrangements are described below to simplify the present disclosure. These are merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact.

Embodiments of the present disclosure include an axial fan assembly that includes fan blades with several characteristics that overcome or decrease the effects of shortcomings of existing approaches to provide airflow along the entire length of the fan blades, instead of just at outer regions of the blades, as well as a method of manufacturing the fan blade assembly.

The fan assembly may include a hub with multiple apertures used to secure the fan assembly to a source of rotational motion. Extending from the hub are a plurality of fan blades. In an example, six fan blades are provided around an outer circumference of the hub. Each fan blade may include a neck where the fan blade couples to the hub, a proximal end, a distal end at the radially distant tip of the fan blade, a leading edge, and a trailing edge.

Each fan blade may be non-uniform, twisted, reverse-swept, and non-airfoil. For example, the width at the proximal end may be greater than the width of a fan blade at the distal end. Further, the reverse sweep with respect to the leading edge of a fan blade places the leading edge of the fan blade at the proximal end "upstream" in a direction of rotation to the leading edge of the fan blade at the distal end. As another example, the twist may begin at the neck at the proximal end of the fan blade and continue along the length of the radius of each fan blade toward the distal end. Finally, the thickness of each fan blade along its chord width may remain approximately the same, and thus non-airfoil.

As a result of the above properties, the fan blade may operate in a variety of environments to cool different components with improved efficiency. In particular, the characteristics of the fan blades noted above enables axial airflow along substantially the entire length of each fan blade, instead of just outer regions of the fan blades and not towards the center (hub) of a fan as was experienced by prior designs. With this improved efficiency, other gains are possible as well. For example, in a vehicle, the improved efficiency may reduce the amount of horsepower consumed by the fan assembly while providing sufficient airflow to the engine (i.e., the source of rotation motion for the fan assembly). For example, where a prior fan assembly may have pulled 10 horsepower to provide sufficient cooling capacity, the fan assembly according to embodiments of the present disclosure may pull 1 horsepower. In turn, the reduced horsepower load may result in improved fuel efficiency for the vehicle in which the fan assembly is installed.

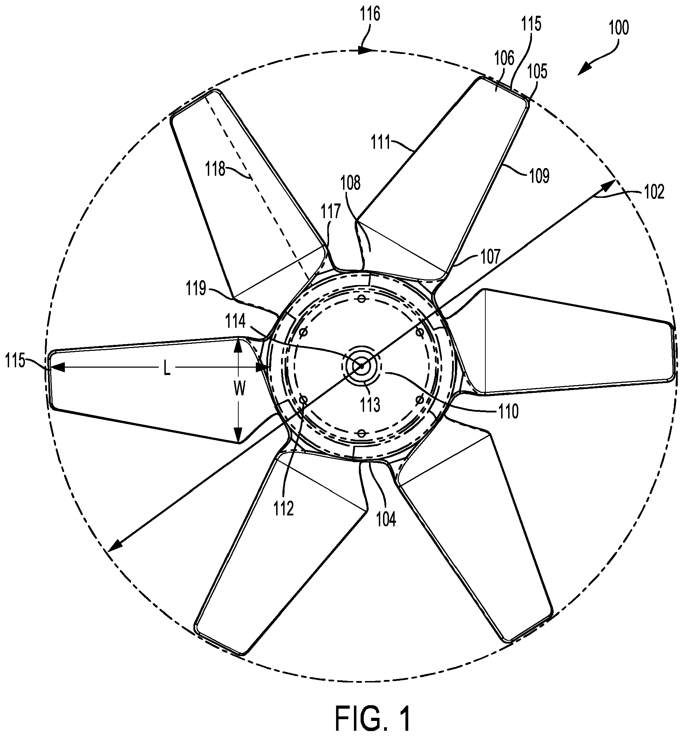

FIG. 1 illustrates a plan view of a schematic of an exemplary fan assembly 100 according to one or more aspects of the present disclosure. The fan assembly 100 as illustrated is an axial flow fan. In particular, the fan assembly 100 is configured to rotate in direction 116 about an axis 114, inducing airflow in a direction parallel to the axis 114 when rotating. The fan assembly 100 includes a hub 104, a plurality of fan blades 106, a center region 110, and one or more apertures 112.

The hub 104 includes the center region 110 and the one or more apertures 112. As illustrated, the center region 110 includes a small aperture 113 centered at the axis 114, as well as the one or more apertures 112 located along a circumference of an inner radius of the hub 104. Although illustrated as including a small aperture 113 at the axis 114, the center region 110 in alternative embodiments may have a relatively large aperture 113 centered at the axis 114 (in relation to the overall diameter of the hub 104). For example, the relatively large aperture 113 may extend in some embodiments to a line just inside the inner radius of the hub 104 at which point the one or more apertures 112 are located. In some implementations, the aperture 113 centered at the axis 114 and the one or more apertures 112 extend through the length of the center region 110 to provide passage for securing mechanisms, such as bolts, shafts (e.g., a pilot shaft, where applicable), etc., to impart rotation to the fan assembly 100 during operation.

The size of the aperture 113 centered at the axis 114 may be determined by the application environment of a given fan assembly 100 as noted further below. In some embodiments, such as where the center region 110 includes the small aperture 113 centered at the axis 114 and the overall diameter 102 is relatively small (i.e. less than 5 inches), the one or more apertures 112 may be omitted. The one or more apertures 112, as well as the aperture 113 centered at the axis 114, may be used to secure the fan assembly 100 to a driving source, such as an engine or electric motor (or a mechanism coupling the fan assembly 100 to a driving source).

The plurality of fan blades 106 extend radially away from the hub 104. There may be a variety of configurations with differing numbers of fan blades 106. The illustrated embodiment includes six fan blades 106 spread evenly around the circumference of the hub 104. The total number of fan blades 106 may depend upon the overall diameter 102 of the fan assembly 100 or the desired airflow. For example, larger fan assemblies 100 may include more fan blades 106, while smaller fan assemblies 100 may include six or fewer (without providing so many fan blades 106 that they do not impinge on axial air flow). However, depending on the application, in some instances larger fan assemblies may also include six or fewer fan blades. Each fan blade 106 includes a neck 108, a proximal end 107 that includes the neck 108, a distal end 105 that includes a tip 115 of the fan blade 106 at its outermost radius extending from the hub 104, leading edge 109 and trailing edge 111.

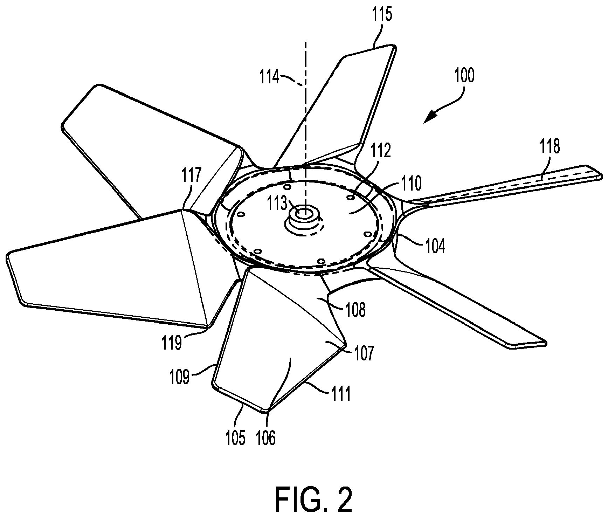

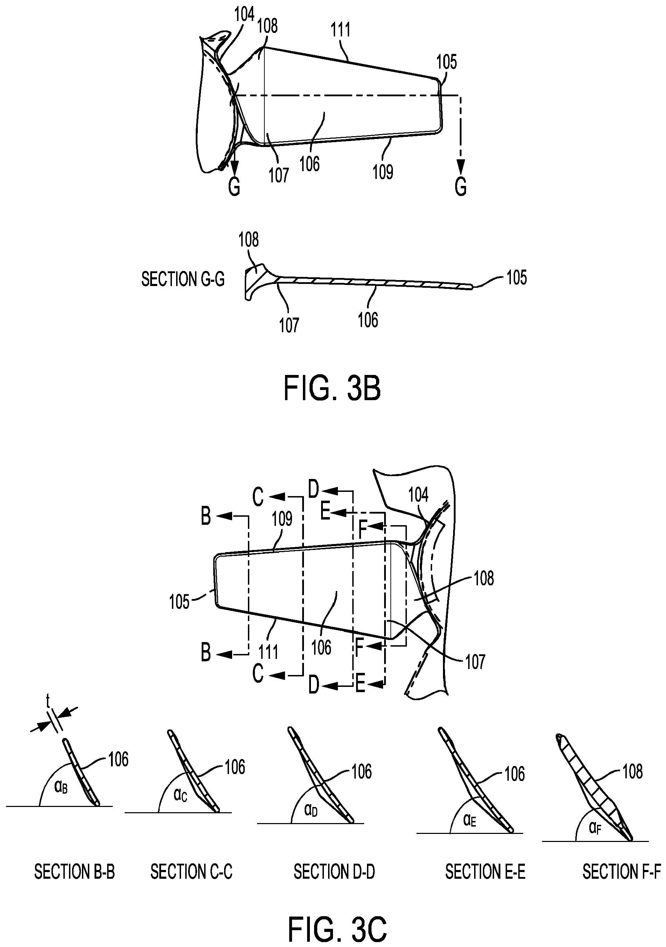

As illustrated in FIG. 1 (as well as FIGs. 2, 3B, and 3C), each of the fan blades 106 is reverse-swept. Extending from the proximal end 107 along the leading edge 109 (also referred to in terms of the radius of the fan assembly 100 herein) toward the distal end 105, there is an angle of reverse sweep such that the leading edge 109 in the region of the proximal end 107 is "upstream" in the direction of rotation 116 to regions of the leading edge 109 along the fan blade 106 toward the distal end 105 (along the radius). Thus, the regions of the leading edge 109 further along the radius toward the distal end 105 of a fan blade 106 are "downstream" in the direction of rotation 116 to the leading edge 109 in the region of the proximal end 107. Reverse sweep occurs when each blade section along a radial stacking line 118 is shifted backward away from the leading edge in parallel to the fan blade 106's chord line (its width "W" as illustrated in FIG. 1).

The amount of the reverse sweep along the leading edge 109 of the fan blade 106 may assume a variety of values. For example, as viewed from the perspective of an unswept fan blade's leading edge, the reverse sweep of the leading edge 109 of the fan blade 106 may be set at approximately 15 degrees at the leading edge elbow 117 in the proximal end 107 (i.e., where the neck 108 meets the bulk of the fan blade 106 at the proximal end 107 at the leading edge 109), such that the leading edge 109 extends along the line offset by 15 degrees (in a downstream direction) from the leading edge of an unswept fan blade.

In addition to the reverse sweep, the trailing edge 111 of each fan blade 106 may be set at a forward angle. In particular, extending from the proximal end 107 along the trailing edge 111 toward the distal end 105, there is an angle of forward attack such that the trailing edge 111 in the region of the proximal end 107 is downstream in the direction of rotation 116 to regions of the trailing edge 111 along the fan blade 106 toward the distal end 105. Thus, the regions of the trailing edge 111 along the radius toward the distal end 105 of a fan blade 106 are upstream in the direction of rotation 116 to the trailing edge 111 in the region of the proximal end 107. This forward angle may begin at the trailing edge elbow 119 in the proximal end 107 (i.e., where the neck 108 meets the bulk of the fan blade at the proximal end 107 at the trailing edge 111), such that the trailing edge 111 extends along a line offset by some angle (e.g., 15 to 30 degrees, such as approximately 26 degrees). Thus, the forward angle at the trailing edge 111 may, in embodiments, be greater than the angle of reverse sweep at the leading edge 109 of a fan blade 106.

Further, as illustrated in FIGs. 1 and 2 and as a result of the reverse sweep and forward angle described above, some implementations of each fan blade 106 have a non-uniform shape. In other words, the width of a fan blade 106 may change along the length of the fan blade 106, such that a size of a chord closer to the proximal end 107 is larger than a size of a chord closer to the distal end 105. This may be achieved, for example, from the fan blades 106 being formed or molded. The fan blades 106 may be molded/formed with the hub 104 (and its corresponding characteristics such as the various apertures in the hub 104).

In some embodiments, the width W of each chord at each subsequent section's radial stacking line 118 is less than the immediately preceding chord's width W until the distal end 105 (e.g., starting from the base chord length that describes the maximum width W of the fan blade 106, as illustrated at the intersection of the neck 108 and the proximal end 107). Thus, the fan blades 106 taper such that a ratio of the width W of the fan blade 106 at the distal end 105 to the width W at the base chord is less than 1. Further, in some embodiments the length L of the fan blade 106 along the radial stacking line 118 may be twice as large as the width W of the fan blade 106 at the base chord length next to the neck 108. Also, in some implementations the length L of the fan blade 106 may be three times as large as the width W of the fan blade 106 at the chord at the distal end 105.

Turning now specifically to FIG. 2, which illustrates a perspective view of a schematic of an exemplary fan assembly 100 according to one or more aspects of the present disclosure, some aspects also illustrated in FIG. 1 are described. As seen from the perspective view of FIG. 2, each fan blade 106 includes a twist from a horizontal plane of the hub 104. The horizontal plane is a plane perpendicular to the axis 114 which is collinear with the axis of rotation of the fan assembly 100. With the twist, a blade pitch angle along a radial stacking line 118 may differ along the length of the fan blade 106. The blade pitch angle refers to the angle at a given cross section along the radial stacking line 118 as compared to a plane parallel to the plane of the hub 104 that is perpendicular to the axis 114. For example, a total difference between the blade pitch angle at the radial stacking line at the hub 104 and the blade pitch angle at the radial stacking line at the tip 115 may be on the order of tens of degrees, e.g. approximately 15 degrees to name an example.

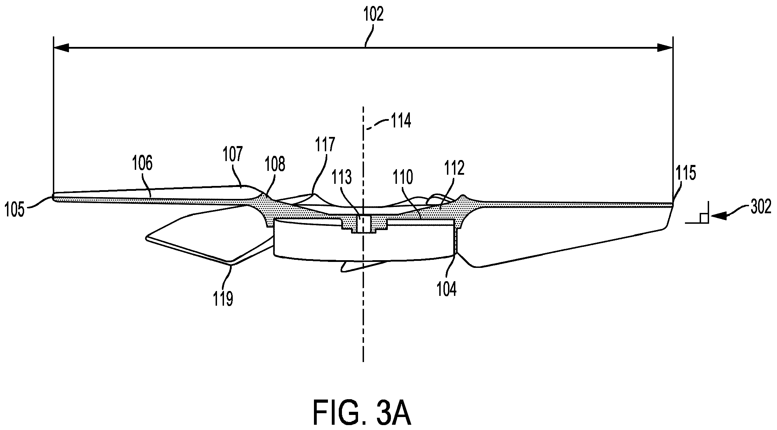

As an example, FIG. 3A illustrates a cross-section view of a schematic of an exemplary fan assembly 100 according to one or more aspects of the present disclosure. FIG. 3A provides a cross-section of a side view of the fan assembly 100 from FIG. 1. Thus, FIG. 3A provides a view of the fan assembly 100 along the plane of the hub 104. As illustrated, the plane of the hub 104 is perpendicular 302 to the axis 114.

FIG. 3B is a schematic of an exemplary fan blade 106 with a cross-section schematic according to one or more aspects of the present disclosure. FIG. 3B takes a cross section G-G along the radial stacking line 118 of a fan blade 106 from FIG. 1. As illustrated in FIG. 3B and 3A, the thickness of the fan blade 106 remains approximately constant along the radial stacking line 118 ranging from the proximal end 107 to the distal end 105.

Focusing further on aspects relating to the twist characteristics of the fan blades 106, FIG. 3C illustrates cross section schematics of a fan blade 106 along different portions of the radial stacking line 118. In other words, each cross section (B-B, C-C, D-D, E-E, and F-F) is of a different chord (sliced along a width of the fan blade 106). The cross section F-F is taken from the neck 108 section of the fan blade 106 at the proximal end 107. The cross section E-E is taken from the proximal end 107 just past the neck 108, the cross section D-D is taken near the proximal end 107 but closer to the middle of the fan blade 106, the cross section C-C is taken toward the distal end 105, and the cross section B-B is taken near the distal end 105.

As illustrated, the twist at the cross section F-F has a first blade pitch angle α_{F} (e.g., approximately 45 degrees), and changes gradually along the radial stacking line 118 as illustrated at subsequent cross sections. The twist at the cross section E-E has a second blade pitch angle α_{E} that is slightly different (e.g., approximately 43 degrees) from the first blade pitch angle α_{F}. The twist at the cross section D-D has a third blade pitch angle α_{D} that is slightly different (e.g., approximately 40 degrees) than the first two. The twist at cross section C-C has a fourth blade pitch angle α_{C} that is slightly different (e.g., approximately 36 degrees) than the preceding three. Finally, the twist at cross section B-B has a fifth blade pitch angle α_{B} slightly different (e.g., 30 degrees) than the preceding four.

This difference in blade pitch angle α along the length of the fan blade 106 radial stacking line 118 may be referred to as the total twist. The total twist of the fan blade 106 describes the difference in blade pitch angle α in how the blade 106 attaches via the neck 108 to the hub 104 and the blade pitch angle α at the distal end 105. In some embodiments, the total twist may have a value between 10 and 20 degrees. In the example illustrated in FIG. 3C, the total twist is illustrated as 15 degrees by way of example only.

In addition to the above characteristics, each fan blade 106 also has a non-airfoil design. In other words, the thickness "t" along a chord remains approximately the same from the leading edge 109 to the trailing edge 111, such as shown in the cross sections B-B, C-C, D-D, E-E, and F-F of FIG. 3C. Because of the non-airfoil design of the fan blades 106, the fan assembly 100 is likely to not be efficient at a particular rotations per minute (RPM) value, though the other unique features of the fan assembly 100 as introduced above compensate for this and thus enables the fan assembly 100 to be more efficient than an airfoil and/or RPM-specific fan.

The fan assembly 100 may be formed of a variety of materials, including fiberglass, carbon fiber, extruded plastics, and different metals (e.g., steel, aluminum, or alloys). For example, larger-diameter fan assemblies 100 may be formed of fiberglass due to their size. Regardless of size, the fan assembly 100 may be cast in a unitary mold.

Referring again to FIG. 1, the fan assembly 100 has a diameter 102 that defines the size of the fan assembly 100 at the outer tip of distal end 105 of each fan blade 106. The fan assembly 100 may be included in a variety of environments and elements that impart rotary motion in the direction of rotation 116, and have a range of diameters 102, without departing from the scope of the present disclosure. For example, the fan assembly 100 may be included in a vehicle, such as a truck. In such embodiments, the diameter 102 may be greater than or equal to 12 inches (or smaller, depending on application). At such size, the fan assembly 100 may operate at a maximum RPM of 4000 or less.

In the truck environment, the fan assembly 100 may be directly mounted to a shaft from the engine through the aperture 113 centered at the axis 114, as well as bolts through the one or more apertures 112, or some combination thereof. The same apertures, or some subset thereof, may still be used in embodiments where the fan assembly 100 is mounted to some rotational energy component associated with the engine, such as a clutch assembly. The clutch assembly may be configured to engage rotation of the fan assembly 100 (in the direction of rotation 116) in response to a temperature or other sensor detecting the temperature of the engine surpassing a threshold, and disengaging once below that threshold or a second threshold (e.g., for hysteresis). The fan assembly 100 may alternatively be attached to an electric motor similarly activated based on a sensed parameter of the engine such as temperature.

As another example, the fan blade assembly 100 of FIG. 1 may be included in a computing device, such as a server, laptop, or other computing device. This could be as part of a power supply cooling mechanism, a central processing unit (CPU) cooling mechanism, or both. In such embodiments, the diameter 102 may be less than or equal to 6 inches, for example 3 inches or less. With this smaller diameter, the magnitude of the twist at any given chord along the radial stacking line 118 of a fan blade 106 may be less than the corresponding chord of a larger fan assembly 100, such as for the truck example. Because of the smaller diameter, the trailing edge elbow 119 in the proximal end 107 (i.e., where the neck 108 meets the bulk of the fan blade at the proximal end 107 at the trailing edge 111) may be reduced in size based on reducing the magnitude of the twist at that section, a magnitude of the forward angle at the trailing edge 111, or some combination of both, in order to ensure that the trailing edge elbow 119 does not extend as far behind the fan assembly 100 so as to better accommodate the tighter environment of the computing device in which it is located.

The fan assembly 100 in the example of the computer fan may be coupled to a rotation energy component associated with the computing device, such as an electric motor. The coupling may be via a bolt or shaft through the aperture 113 centered at the axis 114, as well as through the one or more apertures 112, or some combination thereof. The electric motor may be triggered to impart rotation in the direction of rotation 116, for example, in response to a sensed temperature exceeding a threshold, and stop rotation once below that threshold or a different threshold.

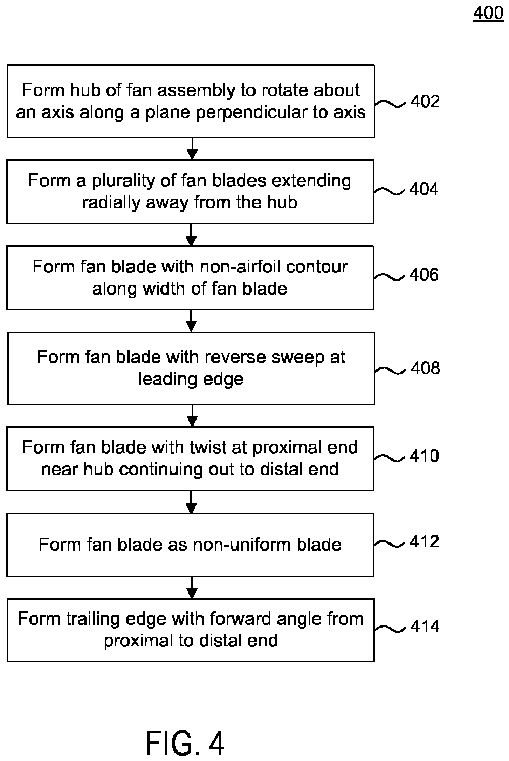

Turning now to FIG. 4, a flow chart is provided showing an exemplary method 400 for manufacturing an exemplary fan assembly 100 according to aspects of the present disclosure. It is understood that additional steps can be provided before, during, and after the steps of method 400, and that some of the steps described can be replaced or eliminated from the method 400.

At block 402, the hub of the fan assembly is formed, for example the hub 104 of the fan assembly 100 of FIG. 1. As part of forming the hub 104, the one or more apertures 112 are formed through the center region 110 along a radius of the hub 104 inside the total radius of the hub 104, as well as an aperture 113 centered at the axis 114, whether small (e.g., for a bolt or shaft) or large (e.g., for a mounting assembly such as a clutch, etc.).

At block 404, the plurality of fan blades, such as the fan blades 106 of FIG. 1, are formed coupled to the hub 104 and extending radially away from the hub 104, including the neck 108, proximal end 107, distal end 105, leading edge 109, and trailing edge 111.

At block 406, the plurality of fan blades 106 are formed with a non-airfoil contour along the width of the fan blade 106, i.e. along the chord in each section of the fan blade 106, such that the thickness along a chord remains approximately the same from the leading edge 109 to the trailing edge 111 along the radial stacking line 118 of a fan blade 106.

At block 408, the plurality of fan blades 106 are formed with reverse sweeps at their leading edges 109. As such, the leading edge 109 in the region of the proximal end 107 is upstream in the direction of rotation 116 to regions of the leading edge 109 along the fan blade 106 toward the distal end 105 (along the radial stacking line 118).

At block 410, the plurality of fan blades 106 are formed with twists so that a blade pitch angle α along a radial stacking line 118 may differ along the length of each of the fan blade 106. The total twist may be between 10 and 20 degrees, for example.

At block 412, the plurality of fan blades 106 are formed with non-uniform blade configurations.

At block 414, the plurality of fan blades are formed with forward angles on their trailing edges 111. Thus, the trailing edge 111 in the region of the proximal end 107 is downstream in the direction of rotation 116 to regions of the trailing edge 111 along the fan blade 106 toward the distal end 105.

Although described as a sequence of blocks above, the actions described at blocks 402-414 may be performed at approximately similar times to each other, for example via a mold (e.g., a unitary mold). Alternatively, they may be performed in stages, such as forming the hub first and the different characteristics of the fan blades subsequently or prior thereto.

In view of the above and the figures, one of ordinary skill in the art will readily recognize that the present disclosure introduces a fan blade assembly apparatus, comprising a hub rotatable about an axis and comprising a plane perpendicular to the axis; and a plurality of fan blades, each of the plurality of fan blades comprising a proximal end coupled to the hub, a distal end extending radially from the hub in a direction transverse to the axis, a leading edge, and a trailing edge, wherein: each fan blade comprises a non-airfoil contour along a length extending from the proximal end to the distal end, the leading edge of each fan blade comprises an angle of reverse sweep such that a first section of the leading edge at the proximal end is upstream in a direction of rotation of the hub from a second section of the leading edge at the distal end, each fan blade comprises a twist at the proximal end such that a radial line of the fan blade is at an angle to the plane of the hub, and each fan blade is molded as a non-uniform blade.

The fan blade assembly apparatus may include wherein the trailing edge of each fan blade is set at a forward angle such that a first section of the trailing edge at the proximal end is downstream in the direction of rotation of the hub from a second section of the trailing edge at the distal end. The fan blade assembly apparatus may further include wherein the plurality of fan blades are formed from fiberglass. The fan blade assembly apparatus may further include wherein the plurality of fan blades are formed from an extruded plastic. The fan blade assembly apparatus may further include wherein the fan blade assembly apparatus comprises a diameter of less than three inches and is structurally arranged to fit within a cooling apparatus for a computer. The fan blade assembly apparatus may further include wherein the fan blade assembly apparatus comprises a diameter of greater than 12 inches and is structurally arranged to fit within a cooling apparatus for a vehicle. The fan blade assembly apparatus may further include wherein the plurality of fan blades comprises six fan blades. The fan blade assembly apparatus may further include wherein the angle of the twist comprises a range between 10 and 20 degrees. The fan blade assembly apparatus may further include wherein the fan blade assembly apparatus is configured to operate at a range of rotations per minute (RPMs) up to approximately 4,000 RPMs.

The present disclosure also includes a non-uniform molded fan blade, comprising: a proximal end coupled to a hub and a distal end extending radially away from the hub in a direction transverse to a rotation axis around which the hub is rotatable; a non-airfoil contour along a length of the non-uniform molded fan blade extending from the proximal end to the distal end; a leading edge comprising an angle of reverse sweep, wherein a first section of the leading edge at the proximal end is upstream in a direction of rotation of the hub from a second section of the leading edge at the distal end; and a twist at the proximal end in a radial line of the non-uniform molded fan blade from a horizontal axis of the hub that is transverse to the rotation axis that places the radial line at an angle to the horizontal axis.

The non-uniform molded fan blade may further comprise a trailing edge comprising a forward angle of attack, wherein a first section of the trailing edge at the proximal end is downstream in the direction of rotation from a second section of the trailing edge at the distal end. The non-uniform molded fan blade may also further include wherein the non-uniform molded fan blade is formed from fiberglass. The non-uniform molded fan blade may also further include wherein the non-uniform molded fan blade is formed from extruded plastic. The non-uniform molded fan blade may also further include wherein the non-uniform molded fan blade is coupled to the hub with a plurality of other non-uniform molded fan blades. The non-uniform molded fan blade may also further include wherein a length of the fan bade along the radial line is twice as large as a proximal width of the non-uniform molded fan blade at the proximal end, and the length of the non-uniform molded fan blade along the radial line is three times as large as a distal width of the non-uniform molded fan blade at the distal end. The non-uniform molded fan blade may also further include wherein the angle of the twist comprises a range between 10 and 20 degrees. The non-uniform molded fan blade may also further include wherein the non-uniform molded fan blade comprises a radius of 6 inches or more and is structurally arranged to fit within a cooling apparatus for a vehicle. The non-uniform molded fan blade may also further include wherein the non-uniform molded fan blade is configured to operate as part of a fan blade assembly at a range of rotations per minute (RPMs) up to approximately 4,000 RPMs.

The present disclosure also introduces a method of manufacturing a fan blade assembly, comprising: forming a hub configured to be rotatable about an axis and comprising a plane perpendicular to the axis; forming a plurality of fan blades, each of the plurality of fan blades comprising a proximal end coupled to the hub, a distal end extending radially from the hub in a direction transverse to the axis, a leading edge, and a trailing edge, wherein the forming further comprises: forming each fan blade with a non-airfoil contour along a length extending from the proximal end to the distal end, forming the leading edge of each fan blade with an angle of reverse sweep such that a first section of the leading edge at the proximal end is upstream in a direction of rotation of the hub from a second section of the leading edge at the distal end, forming each fan blade with a twist at the proximal end such that a radial line of the fan blade is at an angle to the plane of the hub, and forming each fan blade as a non-uniform blade.

The method may further comprise forming the trailing edge of each fan blade set at a forward angle such that a first section of the trailing edge at the proximal end is downstream in the direction of rotation of the hub from a second section of the trailing edge at the distal end.

The foregoing outlines features of several embodiments so that a person of ordinary skill in the art may better understand the aspects of the present disclosure. Such features may be replaced by any one of numerous equivalent alternatives, only some of which are disclosed herein. One of ordinary skill in the art should appreciate that they may readily use the present disclosure as a basis for designing or modifying other processes and structures for carrying out the same purposes and/or achieving the same advantages of the embodiments introduced herein. One of ordinary skill in the art should also realize that such equivalent constructions do not depart from the spirit and scope of the present disclosure, and that they may make various changes, substitutions and alterations herein without departing from the spirit and scope of the present disclosure.

The Abstract at the end of this disclosure is provided to comply with 37 C.F.R. § 1.72(b) to allow the reader to quickly ascertain the nature of the technical disclosure. It is submitted with the understanding that it will not be used to interpret or limit the scope or meaning of the claims.

Moreover, it is the express intention of the applicant not to invoke 35 U.S.C. § 112(f) for any limitations of any of the claims herein, except for those in which the claim expressly uses the word "means" together with an associated function.

## Claims

1. A fan blade assembly apparatus, comprising:
a hub rotatable about an axis and comprising a plane perpendicular to the axis; and
a plurality of fan blades, each of the plurality of fan blades comprising a proximal end coupled to the hub, a distal end extending radially from the hub in a direction transverse to the axis, a leading edge, and a trailing edge, wherein:
each fan blade comprises a non-airfoil contour along a length extending from the proximal end to the distal end,
the leading edge of each fan blade comprises an angle of reverse sweep such that a first section of the leading edge at the proximal end is upstream in a direction of rotation of the hub from a second section of the leading edge at the distal end,
each fan blade comprises a twist at the proximal end such that a radial line of the fan blade is at an angle to the plane of the hub, and
each fan blade is molded as a non-uniform blade.

2. The fan blade assembly apparatus of claim 1, wherein:
the trailing edge of each fan blade is set at a forward angle such that a first section of the trailing edge at the proximal end is downstream in the direction of rotation of the hub from a second section of the trailing edge at the distal end.

3. The fan blade assembly apparatus of claim 1, wherein the plurality of fan blades are provided according to one or more of the following:
(i) wherein the plurality of fan blades are formed from fiberglass;
(ii) wherein the plurality of fan blades are formed from an extruded plastic;
(ii) wherein the plurality of fan blades comprises six fan blades.

4. The fan blade assembly apparatus of claim 1, wherein:
the fan blade assembly apparatus is arranged according to one or more of the following:
(i) wherein the fan blade assembly apparatus comprises a diameter of less than three inches and is structurally arranged to fit within a cooling apparatus for a computer;
(ii) wherein the fan blade assembly apparatus comprises a diameter of greater than 12 inches and is structurally arranged to fit within a cooling apparatus for a vehicle.

5. The fan blade assembly apparatus of claim 1, wherein the fan blade assembly apparatus is configured to operate at a range of rotations per minute (RPMs) up to approximately 4,000 RPMs.

6. A non-uniform molded fan blade, comprising:
a proximal end coupled to a hub and a distal end extending radially away from the hub in a direction transverse to a rotation axis around which the hub is rotatable;
a non-airfoil contour along a length of the non-uniform molded fan blade extending from the proximal end to the distal end;
a leading edge comprising an angle of reverse sweep, wherein a first section of the leading edge at the proximal end is upstream in a direction of rotation of the hub from a second section of the leading edge at the distal end; and
a twist at the proximal end in a radial line of the non-uniform molded fan blade from a horizontal axis of the hub that is transverse to the rotation axis that places the radial line at an angle to the horizontal axis.

7. The non-uniform molded fan blade of claim 6, further comprising:
a trailing edge comprising a forward angle of attack, wherein a first section of the trailing edge at the proximal end is downstream in the direction of rotation from a second section of the trailing edge at the distal end.

8. The non-uniform molded fan blade of claim 6, wherein the non-uniform molded fan blade is formed (i) from fiberglass or (ii) from extruded plastic.

9. The non-uniform molded fan blade of claim 6, wherein the non-uniform molded fan blade is coupled to the hub with a plurality of other non-uniform molded fan blades.

10. The non-uniform molded fan blade of claim 6, wherein:
a length of the non-uniform molded fan bade along the radial line is twice as large as a proximal width of the non-uniform molded fan blade at the proximal end, and
the length of the non-uniform molded fan blade along the radial line is three times as large as a distal width of the non-uniform molded fan blade at the distal end.

11. The fan blade assembly apparatus of claim 1 or the non-uniform molded fan blade of claim 6, wherein the angle of the twist comprises a range between 10 and 20 degrees.

12. The non-uniform molded fan blade of claim 6, wherein:
the non-uniform molded fan blade comprises a radius of 6 inches or more and is structurally arranged to fit within a cooling apparatus for a vehicle.

13. The non-uniform molded fan blade of claim 6, wherein the non-uniform molded fan blade is configured to operate as part of a fan blade assembly at a range of rotations per minute (RPMs) up to approximately 4,000 RPMs.

14. A method of manufacturing a fan blade assembly, comprising:
forming a hub configured to be rotatable about an axis and comprising a plane perpendicular to the axis; and
forming a plurality of fan blades, each of the plurality of fan blades comprising a proximal end coupled to the hub, a distal end extending radially from the hub in a direction transverse to the axis, a leading edge, and a trailing edge, wherein the forming further comprises:
forming each fan blade with a non-airfoil contour along a length extending from the proximal end to the distal end,
forming the leading edge of each fan blade with an angle of reverse sweep such that a first section of the leading edge at the proximal end is upstream in a direction of rotation of the hub from a second section of the leading edge at the distal end,
forming each fan blade with a twist at the proximal end such that a radial line of the fan blade is at an angle to the plane of the hub, and
forming each fan blade as a non-uniform blade.

15. The method of claim 14, further comprising:
forming the trailing edge of each fan blade set at a forward angle such that a first section of the trailing edge at the proximal end is downstream in the direction of rotation of the hub from a second section of the trailing edge at the distal end.
